# EUROPEAN PATENT APPLICATION

(11) **EP 4 852 214 A1**
(43) Date of publication of application: **09.12.2026**
(21) Application number: 25747887.5
(22) Date of filing: 24.01.2025
(51) Int. Cl.: H01M 50/636, H01M 50/645

(54) **BATTERY SEALING STRUCTURE AND BATTERY**

(30) Priority: 31.01.2024 CN 202410129799
(71) Applicant: SVOLT Energy Technology Co., Ltd., Changzhou, Jiangsu 213200 (CN)
(72) Inventor: SUN, Chao, hangzhou, Jiangsu 213200 (CN)
(74) Representative: Michalski Hüttermann & Partner mbB
(86) International application number: PCT/CN2025/074951
(87) International publication number: WO 2025/162319

(57) **Abstract**

A battery sealing structure and a battery. The battery sealing structure comprises: a battery cell cover plate or a casing, provided with a liquid injection hole running through a main body thereof; and a sealing member, welded to the liquid injection hole, so that a welding portion is formed between at least a portion of the circumferential side wall of the sealing member and at least a portion of the hole wall of the liquid injection hole, wherein the welding portion has a penetration depth L1=500-1000 µm and a weld width L2 ≥ 500 µm. The battery sealing structure ensures a reliable connection between the sealing member and the liquid injection hole by defining the penetration depth L1 and the weld width L2 of the welding portion, thereby effectively preventing electrolyte leakage, meeting sealing requirements of battery electrolytes, improving battery yield and service life, and ensuring safe battery use.

## Description

### CROSS-REFERENCES TO RELATED APPLICATIONS

The present application claims the priority of Chinese patent application No. CN202410129799.8, filed with the China National Intellectual Property Administration on January 31, 2024, entitled "Battery Sealing Structure and Battery," the entire contents of which are incorporated herein by reference.

### FIELD

The present application relates to the field of batteries, and in particular to a battery sealing structure and a battery.

### BACKGROUND

A battery top cover is one of important components of a power battery. The battery top cover and the housing are assembled to form an enclosing structure for accommodating a cell. A liquid injection hole is provided on the battery top cover, and the liquid injection hole is used for injecting electrolyte into the housing. After electrolyte is injected, the liquid injection hole on the top cover needs to be sealed to isolate the cell from the external environment and ensure that the cell is enclosed in a chemical environment required for its operation. To prevent leakage of the electrolyte within the housing, it is necessary to seal the liquid injection hole. Currently, a sealing structure is connected to the battery top cover by a laser sealing method. However, the welding effect between the sealing structure and the battery top cover is not satisfactory, resulting in poor sealing performance of the sealing structure and a risk of electrolyte leakage, reducing the service life and usage safety of the battery.

### BRIEF SUMMARY

In view of the above, the present application aims to provide a battery sealing structure and a battery to solve the problems in the related art that the welding effect of the sealing structure for the liquid injection hole is not satisfactory, resulting in poor sealing performance of the sealing structure and a risk of electrolyte leakage, thereby reducing the service life and usage safety of the battery.

According to an embodiment of the present application, there is provided a battery sealing structure including:
a cell cover plate or a housing, provided with a liquid injection hole penetrating through a body of the cell cover plate or the housing;
a sealing member, welded to the liquid injection hole to form a weld portion between at least a part of a circumferential sidewall of the sealing member and at least a part of a hole wall of the liquid injection hole, where a penetration depth L₁ of the weld portion is L₁=500~1000µm, and a weld width L₂ of the weld portion is L₂≥500µm.

Advantageous Effects: The battery sealing structure of the present application has the sealing member welded to the liquid injection hole to form a weld portion at the connection therebetween. By defining the dimensions of the penetration depth L1 and the weld width L2 of the weld portion, it is ensured that the sealing member is reliably connected to the liquid injection hole, effectively preventing electrolyte leakage, satisfying sealing requirements of the battery electrolyte, further improving the yield and service life of the battery, and ensuring the usage safety of battery.

In an embodiment, an elastic strain portion extends in a polyline shape along a direction from a score to a base.

In an embodiment, compressive strength of the weld portion is greater than 1.2 MPa.

In an embodiment, a leakage rate of the weld portion is less than 1×10⁻⁶ Pa·m³/s.

In an embodiment, welding power for forming the weld portion is 6000~8000 W.

In an embodiment, energy for forming the weld portion is 10~40 J.

In an embodiment, a welding speed for forming the weld portion is 7~10mm/s.

In an embodiment, the weld portion is formed by sequentially connecting a plurality of weld spots; an overlap ratio of two adjacent weld spots is not less than 50%, wherein the overlap ratio is denoted by (L₂-L₃)/L₂.

In an embodiment, the sealing member is made of a material identical to that of the cell cover plate or the housing provided with the liquid injection hole.

In an embodiment, the liquid injection hole is formed as a counterbore to form a sidewall of the liquid injection hole as a boss, and two ends of the liquid injection hole in an axial direction are respectively formed as a first mounting portion and a second mounting portion, a radial dimension of the first mounting portion is greater than a radial dimension of the second mounting portion, and the sealing member is disposed at the first mounting portion.

In an embodiment, a ratio of the penetration depth L₁ to a groove depth L₄ of the first mounting portion is denoted by K₁=L₁/L₄>0.5; and/or
a ratio of the weld width L₂ to the groove depth L₄ of the first mounting portion is denoted by K₂=L₂/L₄>0.5.

In an embodiment, the battery sealing structure further including:
an elastic member disposed at the second mounting portion.

According to the embodiments of the present application, there is further provided a battery, including the battery sealing structure mentioned above;
the battery is a prismatic battery, where a length of the prismatic battery is 100~600mm, a width of the prismatic battery is 50~250mm, and a height of the prismatic battery is 10~100mm; or
the battery is a blade battery, where a length of the blade battery is 600~1500mm, a width of the prismatic battery is 50~250mm, and a height of the prismatic battery is 10~100mm.

Advantageous Effects: The battery includes the above-described battery sealing structure, and therefore has the advantages of good sealing performance and low risk of electrolyte leakage, further improving the service life of the battery and ensuring safety in battery usage.

### BRIEF DESCRIPTION OF THE DRAWINGS

For the purpose of describing specific embodiments of the present application or the technical solutions in the related art more clearly, accompanying drawings required for use in the description of the specific embodiments or the related art are briefly introduced below. Drawings described below are some embodiments of the present application, and for those skilled in the art, other drawings can be obtained based on these drawings without any creative efforts.
FIG. 1 is a schematic structural diagram of a battery sealing structure according to an embodiment of the present application;
FIG. 2 is a schematic structural diagram of a sealing member and a liquid injection hole of a battery sealing structure before welding according to an embodiment of the present application;
FIG. 3 is a schematic structural diagram of a sealing member and a liquid injection hole of a battery sealing structure after welding according to an embodiment of the present application;
FIG. 4 is a partial enlarged schematic diagram of a weld portion of a battery sealing structure according to an embodiment of the present application;
FIG. 5 is a metallographic cross-sectional view of a weld portion of a battery sealing structure according to an embodiment of the present application;
FIG. 6 is a schematic structural diagram of another sealing member structure and a liquid injection hole of a battery sealing structure before welding according to an embodiment of the present application;
FIG. 7 is a schematic structural diagram of another battery sealing structure according to an embodiment of the present application;
FIG. 8 is an enlarged schematic structural diagram of the liquid injection hole shown in FIG. 7.

Reference signs:
10 - cell cover plate or housing; 11 - liquid injection hole; 111 - first mounting portion; 112 - second mounting portion; 20 - sealing member; 30 - weld portion; 31 - weld spot; 40 - elastic member.

### DETAILED DESCRIPTION

In order to make the objectives, technical solutions, and advantages of the embodiments of the present application clearer, the technical solutions in the embodiments of the present application are described clearly and completely below with reference to the accompanying drawings in the embodiments of the present application. The described embodiments are a part of the embodiments of the present application, rather than all of the embodiments. All other embodiments obtained by those skilled in the art based on the embodiments of the present application without any creative efforts shall fall within the scope of protection of the present application.

According to the embodiments of the present application, there is provided a battery sealing structure, which includes a cell cover plate or a housing 10, a liquid injection hole 11, and a sealing member 20.

Hereinafter, specific structures of the above-mentioned components of the battery sealing structure according to the present embodiment are described.

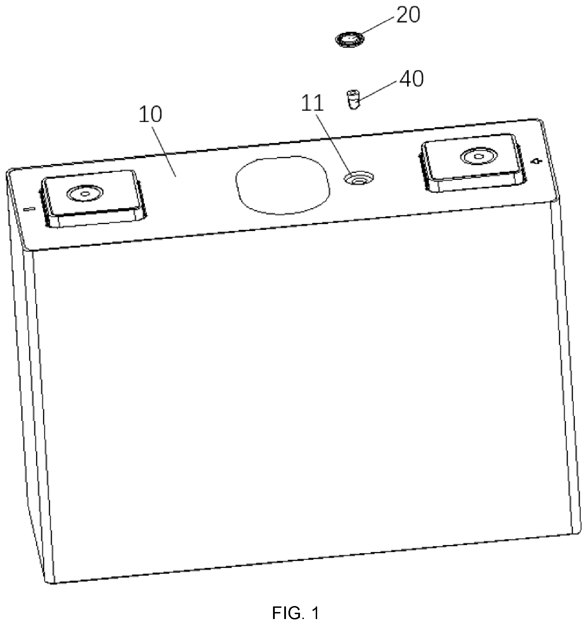

In the present embodiment, as shown in FIG. 1, the cell cover plate and the housing are assembled to form an enclosing structure, and an accommodation cavity is formed inside the housing. The cell cover plate or the housing 10 is provided with the liquid injection hole 11 penetrating through a body of the cell cover plate or the housing, and electrolyte can be injected into the accommodation cavity through the liquid injection hole 11. A cross-section of the liquid injection hole 11 may be formed as a circular shape, a rectangular shape, or the like, as long as it is ensured that electrolyte can be injected from the outside of the housing into the accommodation cavity via the liquid injection hole 11.

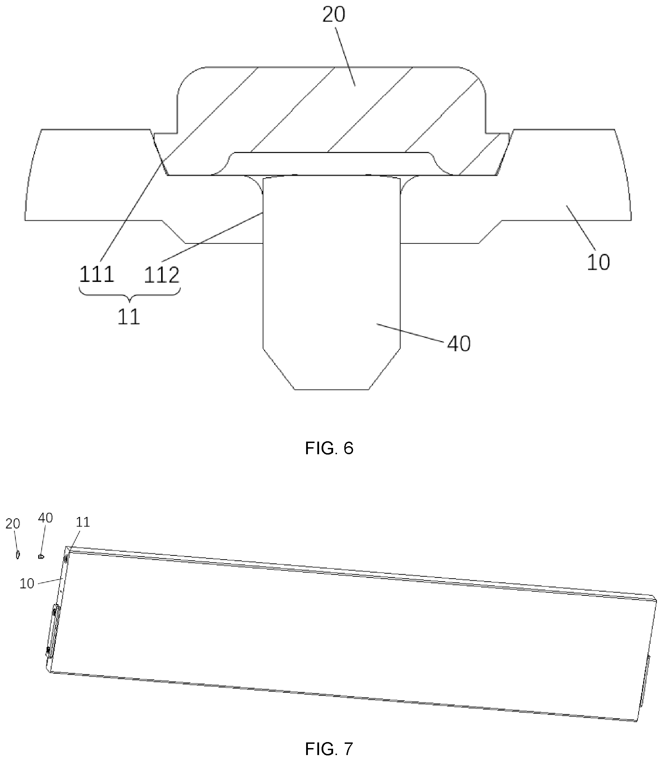

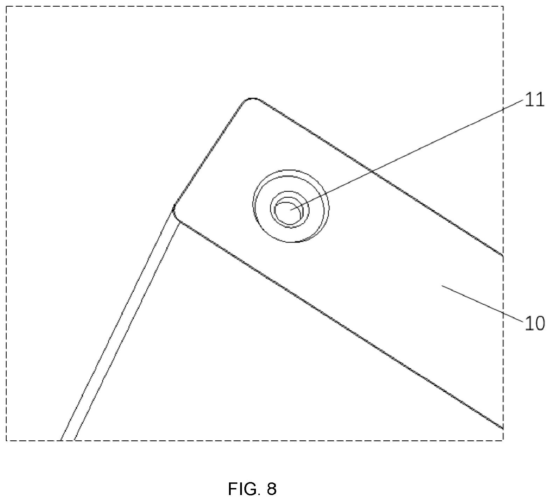

In an embodiment, as shown in FIG. 1, the battery is a prismatic battery, and the cell cover plate correspondingly is formed as an elongated rectangular plate-shaped structure, or the housing is formed as a rectangular body structure. In another embodiment, as shown in FIG. 7 and FIG. 8, the battery is a blade battery, and the cell cover plate correspondingly is formed as a rectangular plate-shaped structure, or the housing is formed as a rectangular strip-shaped structure. The cell cover plates may be provided at both ends of the blade battery in a length direction thereof, and at least one of the cell cover plates may be provided with the liquid injection hole 11. In addition, in other embodiments, the battery is a cylindrical battery, and the cell cover plate correspondingly is formed as a circular plate-shaped structure, or the housing is formed as a cylindrical body structure. It should be noted that the liquid injection hole 11 in the prismatic battery, the blade battery, or the cylindrical battery may all be formed as the structure shown in FIG. 8.

Further, in the present embodiment, as shown in FIGS. 1 to 3 and FIG. 6, the sealing member 20 is welded to the liquid injection hole 11. The sealing member 20 is formed as a sheet-like structure adapted to the liquid injection hole 11, that is, when the cross-section of the liquid injection hole 11 is circular, the sealing member 20 is formed as a circular sheet-like structure, and when the cross-section of the liquid injection hole 11 is rectangular, the sealing member 20 is formed as a rectangular sheet-like structure.

Specifically, the sealing member 20 is provided with a protruding portion protruding toward the liquid injection hole 11, and the protruding portion is formed as an annular structure. An edge of the sealing member 20 is formed as a bent portion extending in a direction away from a protruding direction of the protruding portion, such that the bent portion can fit the hole wall of the liquid injection hole 11. The protruding portion may be formed by a stamping process, such that a groove is formed on a side of the protruding portion facing away from the liquid injection hole 11. The bent portion is formed as a part of a groove wall of the groove. The arrangement of the groove allows the sealing member 20 to have an elastic deformation space in a radial direction thereof, ensuring that the bent portion can fit closely the groove wall of the liquid injection hole 11, which helps to improve the welding strength between the sealing member 20 and the liquid injection hole 11.

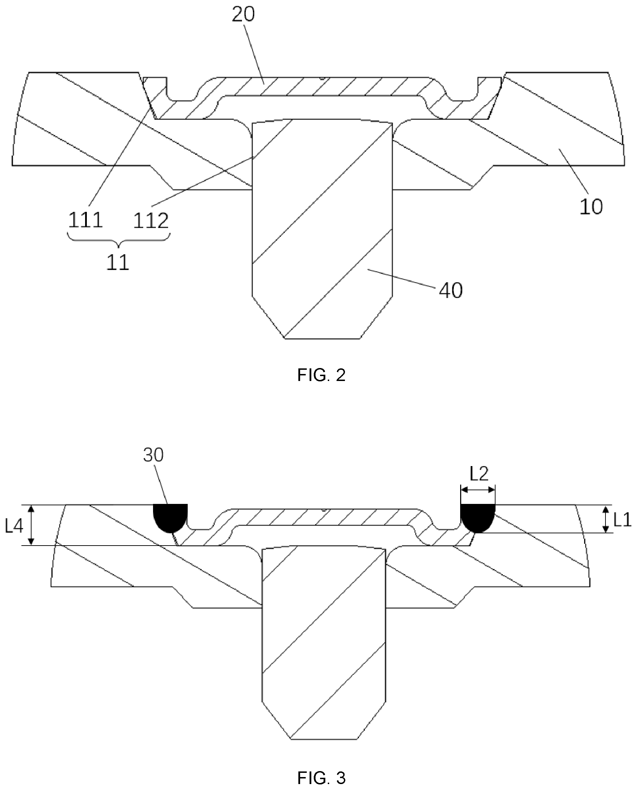

In an embodiment, as shown in FIG. 2, a top of the sealing member 20 does not protrude beyond an outer side of the liquid injection hole 11, reducing a dimension of the battery in an axial direction of the liquid injection hole 11, which helps to improve energy density of the battery under the same volume. In other embodiments, as shown in FIG. 6, the top of the sealing member 20 protrudes beyond the outer side of the liquid injection hole 11, and the sealing member 20 has a certain thickness, which can effectively reduce deformation of the sealing member 20 caused by welding and ensure the welding strength between the sealing member 20 and the liquid injection hole 11.

In an embodiment, the sealing member 20 is made of a material identical to that of the cell cover plate or the housing 10 provided with the liquid injection hole 11. For example, both the sealing member 20 and the cell cover plate or the housing 10 are made of an aluminum alloy material. The same material has identical temperature and chemical reactions during a melting process, ensuring uniform welding and reducing uncertain factors during the welding process.

However, in other embodiments, the sealing member 20 and the cell cover plate or the housing 10 may be made of different materials. For example, the cell cover plate or the housing 10 may be made of an aluminum alloy material, while the sealing member 20 may be made of a stainless steel material, such as 304 stainless steel.

Furthermore, in the present embodiment, as shown in FIG. 3, the sealing member 20 is welded to the liquid injection hole 11 to form a weld portion 30 between at least a part of the circumferential sidewall of the sealing member 20 and at least a part of the hole wall of the liquid injection hole 11. During the welding process, due to the heat of the welding arc, part of the sealing member 20 and part of the cell cover plate or the housing 10 (i.e., the base material) are melted to form a liquid metal pool having a certain geometric shape, that is, the weld portion 30 is a weld pool.

The weld pool has a penetration depth L₁ and a weld width L₂. The penetration depth L₁ is a depth to which the molten metal penetrates into the base material during the welding process, while the weld width L₂ is a transverse width of the molten metal during the welding process. In general, the welding strength is proportional to the penetration depth L₁ and the weld width L₂. If the penetration depth L₁ is too shallow and/or the weld width L₂ is too narrow, it is likely to result in insufficient welding strength between the sealing member 20 and the liquid injection hole 11. However, if the penetration depth L₁ is too deep, it may also lead to a decrease in the connection quality between the sealing member 20 and the liquid injection hole 11, and even a risk of burn-through. To this end, in the present embodiment, the penetration depth L₁ of the weld portion 30 is L₁=500~1000 µm, and the weld width L₂ of the weld portion 30 is L₂≥500 µm. Under the limitation of this parameter range, it can be ensured that the sealing member 20 is reliably connected to the liquid injection hole 11, effectively preventing electrolyte leakage, thereby satisfying the sealing requirements of the battery electrolyte.

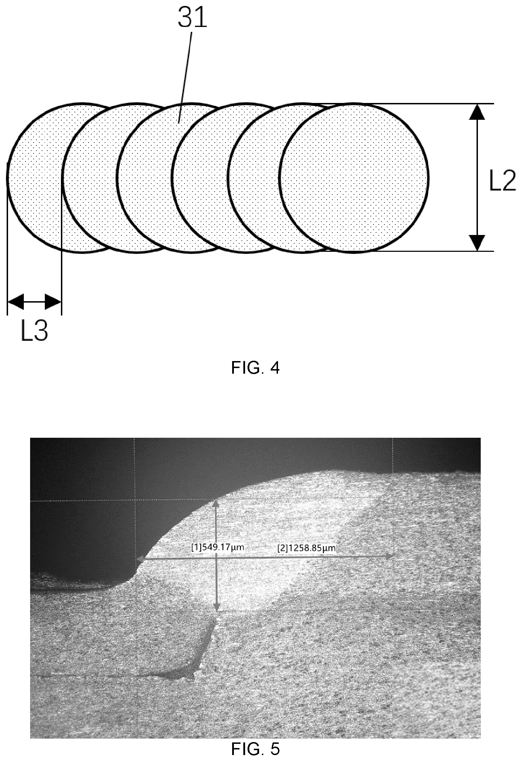

Random inspections were conducted on qualified products. Specifically, the welded battery sealing structure was cut along a side surface thereof and metallographic analysis is performed on the weld portion 30. The inspection results are shown in FIG. 5, in which the region indicated by the vertical arrow is the penetration depth L₁. As measured, the penetration depth L₁ is 549.17 µm, satisfying the limitation requirement that the penetration depth L₁=500~1000 µm. The region indicated by the horizontal arrow is the weld width L₂. As measured, the weld width L₂ is 1258.85 µm, satisfying the parameter limitation requirement that the weld width L₂≥500 µm. Therefore, it is further demonstrated that under the limitation of this parameter range, it can be ensured that the sealing member 20 is reliably connected to the liquid injection hole 11, effectively preventing electrolyte leakage, thereby satisfying the sealing requirements of the battery electrolyte.

In an embodiment, the weld portion 30 is formed as a closed annular structure and is sandwiched between the sealing member 20 and the liquid injection hole 11 to achieve a full-circle welding around the sealing member 20, effectively improving the reliability of the tight connection between the sealing member 20 and the liquid injection hole 11.

Compressive strength is a maximum pressure value that an object can withstand. In the present embodiment, the compressive strength of the weld portion 30 is greater than 1.2 MPa, ensuring the connection strength between the sealing member 20 and the liquid injection hole 11. Even in the case where the cell fails and gas is generated within the housing but is insufficient to rupture a pressure relief member, tight connection between the sealing member 20 and the liquid injection hole 11 can still be ensured.

A leakage rate can reflect the sealing performance of the weld portion 30 with respect to the liquid injection hole 11 and the sealing member 20. In the present embodiment, the leakage rate of the weld portion 30 is less than 1×10⁻⁶ Pa·m³/s, thereby ensuring the reliability of the connection between the liquid injection hole 11 and the sealing member 20, and improving the safety and stability of the battery.

In the present embodiment, as shown in FIG. 4, the weld portion 30 may be formed by laser welding. A quasi-continuous wave (QCW) laser may be used as the laser. The laser moves along a welding path conforming to the shape of the connection between the sealing member 20 and the liquid injection hole 11 and emits pulsed laser light to perform welding. The weld portion 30 is formed by sequentially connecting a plurality of weld spots 31, with two adjacent weld spots 31 partially overlapping each other. Among two adjacent weld spots 31, along the welding path, a downstream weld spot 31 overlaps an upstream weld spot 31, and a distance between the two adjacent weld spots 31 is a spot pitch L₃.

In the present embodiment, as shown in FIG. 4, an overlap ratio of two adjacent weld spots 31 is not less than 50%, and the overlap ratio is denoted by (weld width L₂ - spot pitch L₃)/weld width L₂, ensuring the connection strength of the weld portion 30 connecting the sealing member 20 to the liquid injection hole 11.

Further, in the present embodiment, welding power for forming the weld portion 30 by the laser is 6000~8000 W. When the welding power is lower than 6000 W, the penetration depth L₁ decreases; when the welding power exceeds 8000 W, the penetration depth L₁ increases.

In addition, in the present embodiment, the energy for forming the weld portion 30 by the laser is 10~40 J. The energy affects the degree of melting of the metal, affecting the dimensions of the penetration depth L₁ and the weld width L₂.

Furthermore, a welding speed affects the penetration depth L₁. A high welding speed causes the penetration depth L₁ to become shallower, while a low welding speed causes excessive melting and result in burn-through. In the present embodiment, the welding speed for forming the weld portion 30 by the laser is preferably 7~10 mm/s.

In the present embodiment, as shown in FIGS. 2 and 3, the liquid injection hole 11 is formed as a counterbore to form the sidewall of the liquid injection hole 11 as a boss. Specifically, two ends of the liquid injection hole 11 in an axial direction thereof are respectively formed as a first mounting portion 111 and a second mounting portion 112. A radial dimension of the first mounting portion 111 is greater than a radial dimension of the second mounting portion 112. After the cell cover plate is mounted on the housing, the first mounting portion 111 faces an outside of the housing, and the second mounting portion 112 faces an inside of the housing. The sealing member 20 is disposed at the first mounting portion 111. A dimension of the first mounting portion 111 in the axial direction of the liquid injection hole 11 may be 1 mm, and a thickness dimension of the cell top cover may be 2 mm.

In an embodiment, as shown in FIG. 3, a ratio K₁ = L₁/L₄ of the penetration depth L₁ to a groove depth L₄ of the first mounting portion 111 is denoted by K₁ = L₁/L₄ > 0.5; and/or a ratio K₂ = L₂/L₄ of the weld width L₂ to the groove depth L₄ of the first mounting portion 111 is denoted by K₂ = L₂/L₄ > 0.5. Under the limitation of this parameter range, the connection reliability between the sealing member 20 and the liquid injection hole 11 is further improved to effectively prevent leakage of electrolyte.

In addition, in the present embodiment, as shown in FIGS. 1 to 3, the battery sealing structure further includes an elastic member 40 disposed at the second mounting portion 112. The elastic member 40 is formed as a columnar structure and is connected to the second mounting portion 112 by an interference fit, forming a primary seal for the accommodation cavity filled with the electrolyte before the sealing member 20 is welded to the liquid injection hole 11. After welding, the sealing member 20 and the liquid injection hole 11 form a secondary sealing, to further improve the sealing reliability of the battery sealing structure.

In an embodiment, the elastic member 40 is made of a corrosion-resistant rubber material, such as a fluorine rubber material, thereby avoiding a situation where the sealing performance of the elastic member 40 fails due to corrosion of the elastic member 40 by the electrolyte. In addition, at least a portion of the elastic member 40 facing an inner side of the housing is formed as a tapered structure, and a radial dimension of the tapered structure gradually decreases along a direction in which the elastic member 40 extends into the second mounting portion 112 to facilitate the elastic member 40 being inserted into the second mounting portion 112.

By subjecting the battery sealing structure, in which the penetration depth L₁ of the weld portion 30 ranges from 500 µm to 1000 µm and the weld width L₂ of the weld portion 30 is not less than 500 µm, to a pressure burst test and a helium leak test, it is verified whether the defined ranges of the penetration depth L₁ and the weld width L₂ of the present application can ensure that the sealing member 20 is reliably connected to the liquid injection hole 11, effectively preventing electrolyte leakage and satisfying the sealing requirements of the battery electrolyte. In addition, a comparison is made with battery sealing structures in which the penetration depth or the weld width is less than 500 µm. For specific experimental verification, reference is made to the following table:

| | Penetration depth L₁ (µm) | Weld width L₂ (µm) | Burst strength (Mpa) | Helium leak data (pa·m³/s) |
|---|---|---|---|---|
| Embodiment 1 | 500 | 500 | 1.25 | 1.5×10⁻⁷ |
| Embodiment 2 | 600 | 700 | 1.29 | 3.21×10⁻⁸ |
| Embodiment 3 | 700 | 900 | 1.26 | 5.6×10⁻⁷ |
| Embodiment 4 | 800 | 1100 | 1.33 | 3.6×10⁻⁷ |
| Embodiment 5 | 900 | 600 | 1.28 | 8.3×10⁻⁹ |
| Embodiment 6 | 1000 | 800 | 1.40 | 3.3×10⁻⁸ |
| Embodiment 7 | 550 | 1000 | 1.24 | 2.6×10⁻⁷ |
| Embodiment 8 | 650 | 1200 | 1.27 | 4.3×10⁻⁸ |
| Embodiment 9 | 750 | 550 | 1.32 | 3.5×10⁻⁸ |
| Embodiment 10 | 850 | 650 | 1.37 | 2.4×10⁻⁷ |
| Embodiment 11 | 950 | 750 | 1.34 | 1.8×10⁻⁹ |
| Embodiment 12 | 1000 | 850 | 1.31 | 5.3×10⁻⁷ |
| Comparative example 1 | 100 | 500 | 1.18 | 2.4×10⁻⁷ |
| Comparative example 2 | 200 | 550 | 0.97 | 4.5×10⁻⁸ |
| Comparative example 3 | 250 | 600 | 0.88 | 5.6×10⁻⁷ |
| Comparative example 4 | 350 | 650 | 1.14 | 7.5×10⁻⁸ |
| Comparative example 5 | 400 | 750 | 1.11 | 5.2×10⁻⁷ |
| Comparative example 6 | 450 | 800 | 1.03 | 7.5×10⁻⁸ |
| Comparative example 7 | 500 | 400 | 0.87 | 9.7×10⁻⁵ |
| Comparative example 8 | 600 | 450 | 0.96 | 4.7×10⁻⁶ |
| Comparative example 9 | 700 | 120 | 0.85 | 2.9×10⁻⁶ |
| Comparative example 10 | 800 | 240 | 0.89 | 2.7×10⁻⁶ |
| Comparative example 11 | 900 | 360 | 1.02 | 1.4×10⁻⁶ |
| Comparative example 12 | 1000 | 480 | 1.14 | 7.5×10⁻⁶ |

As can be seen from experimental results of the above table, in Embodiments 1 to 12, the penetration depth L₁ of the weld portion 30 ranges from 500 µm to 1000 µm and the weld width L₂ is not less than 500 µm. The burst tests show that the burst strengths of Embodiments 1 to 12 are all greater than the compressive strength of the weld portion 30, i.e., 1.2 MPa, demonstrating that the welding strength between the sealing member 20 and the liquid injection hole 11 meets the requirements. Moreover, the helium leak tests show that the leakage rates of the weld portion 30 are all less than 1×10⁻⁶ Pa·m³/s, demonstrating that the sealing performance of the battery electrolyte meets the requirements.

In Comparative Examples 1 to 6, although the weld width L₂ is not less than 500 µm, the penetration depth L₁ is less than 500 µm, the burst tests show that the burst strengths of Comparative Examples 1 to 6 are all less than 1.2 MPa, and therefore the compressive strength requirement of the weld portion 30 is not satisfied. In Comparative Examples 7 to 12, although the penetration depth L₁ ranges from 500 µm to 1000 µm, the weld width L₂ is less than 500 µm, the burst tests show that the burst strengths of Comparative Examples 7 to 12 are all less than 1.2 MPa, demonstrating that the compressive strength requirement of the weld portion 30 is not satisfied. Moreover, the helium leak tests show that the leakage rates of the weld portion 30 of Comparative Examples 7 to 12 are all greater than 1×10⁻⁶ Pa·m³/s, demonstrating that the sealing performance of the battery electrolyte also does not meet the requirements.

In summary, it is further demonstrated that under the conditions that the penetration depth L₁ of the weld portion 30 ranges from 500 µm to 1000 µm and the weld width L₂ of the weld portion 30 is not less than 500 µm, the sealing member 20 can be reliably connected to the liquid injection hole 11, satisfying the sealing requirements of the battery electrolyte.

According to the present application, there is provided a battery sealing structure, in which the sealing member is welded to the liquid injection hole to form a weld portion at the connection therebetween. By defining the dimensions of the penetration depth L₁ and the weld width L₂ of the weld portion, it is ensured that the sealing member is reliably connected to the liquid injection hole, effectively preventing electrolyte leakage, thereby satisfying the sealing requirements of the battery electrolyte.

According to the embodiments of the present application, there is further provided a battery. The battery may be formed as a prismatic battery or a blade battery. When the battery is a prismatic battery, a length of the prismatic battery is 100~600 mm, a width of the prismatic battery is 50~250mm, and a height of the prismatic battery is 10~100 mm. When the battery is a blade battery, a length of the blade battery is 600~1500 mm, a width of the blade battery is 50~250 mm, and a height of the blade battery is 10~100 mm.

According to the embodiments of the present application, there is provided a battery comprising the above-described battery sealing structure. In the battery sealing structure, the sealing member is reliably connected to the liquid injection hole, effectively preventing leakage of electrolyte, satisfying the sealing requirements of the battery electrolyte, further improving the yield and service life of the battery, and ensuring usage safety in battery.

The above provides a detailed description of the battery sealing structure and a battery according to the embodiments of the present application, and uses specific examples to illustrate the principles and implementations of the present application. The description of the above embodiments is merely for facilitating understanding of the solutions and core concepts of the present application. Those skilled in the art should understand that they can still modify the technical solutions described in the foregoing embodiments, or make equivalent substitutions for some of the features thereof. However, such modifications or substitutions do not cause the essence of the corresponding solutions to depart from the scope of the solutions of the embodiments of the present application.

### Industrial Applicability

The battery sealing structure of the present application has the sealing member welded to the liquid injection hole, so that a weld portion is formed at the connection therebetween. By defining the dimensions of the penetration depth L₁ and the weld width L₂ of the weld portion, it is ensured that the sealing member is reliably connected to the liquid injection hole, effectively preventing electrolyte leakage, thereby satisfying the sealing requirements of the battery electrolyte, further improving the yield and service life of the battery, and ensuring the usage safety of battery.

## Claims

1. A battery sealing structure, comprising:
a cell cover plate or housing, provided with a liquid injection hole penetrating through a body of the cell cover plate or housing;
a sealing member, welded to the liquid injection hole to form a weld portion between at least a part of a circumferential sidewall of the sealing member and at least a part of a hole wall of the liquid injection hole, wherein a penetration depth L₁ of the weld portion is L₁=500~1000 µm, and a weld width L₂ of the weld portion is L₂≥500 µm;
wherein the liquid injection hole is formed as a counterbore to form a sidewall of the liquid injection hole as a boss, and two ends of the liquid injection hole in an axial direction are respectively formed as a first mounting portion and a second mounting portion, a radial dimension of the first mounting portion is greater than a radial dimension of the second mounting portion, and the sealing member is disposed at the first mounting portion;
wherein a ratio of the penetration depth L₁ to a groove depth L₄ of the first mounting portion is denoted by K1, and K₁=L₁/L₄>0.5; and/or
a ratio of the weld width L₂ to the groove depth L₄ of the first mounting portion is denoted by K2, and K₂=L₂/L₄>0.5.

2. The battery sealing structure of claim 1, wherein compressive strength of the weld portion is greater than 1.2 MPa.

3. The battery sealing structure of claim 1, wherein a leakage rate of the weld portion is less than 1×10⁻⁶ Pa·m³/s.

4. The battery sealing structure of claim 1, wherein welding power for forming the weld portion is 6000~8000 W.

5. The battery sealing structure of claim 1, wherein energy for forming the weld portion is 10~40 J.

6. The battery sealing structure of claim 1, wherein a welding speed for forming the weld portion is 7~10 mm/s.

7. The battery sealing structure according to claim 1, wherein the weld portion is formed by sequentially connecting a plurality of weld spots; an overlap ratio of two adjacent weld spots is not less than 50%, wherein the overlap ratio = (L₂-L₃)/L₂.

8. The battery sealing structure of claim 1, wherein the sealing member is made of a material identical to that of the cell cover plate or housing provided with the liquid injection hole.

9. The battery sealing structure of claim 1, further comprising: an elastic member disposed at the second mounting portion.

10. A battery, comprising the battery sealing structure of any of claims 1 to 8;
the battery is a prismatic battery, wherein a length of the prismatic battery is 100~600 mm, a width of the prismatic battery is 50~250 mm, and a height of the prismatic battery is 10~100 mm; or
the battery is a blade battery, wherein a length of the blade battery is 600~1500 mm, a width of the blade battery is 50~250 mm, and a height of the blade battery is 10~100 mm.
